# EUROPÄISCHE PATENTSCHRIFT

(11) **EP 1 305 573 B1**
(45) Veröffentlichungstag und Bekanntmachung des Hinweises auf die Patenterteilung: **30.04.2008**
(21) Anmeldenummer: 01947459.2
(22) Anmeldetag: 12.07.2001
(51) Int. Cl.: G08G 1/01, G08G 1/0967, G08G 1/123

(54) **VERFAHREN ZUM BEREITSTELLEN VON VERKEHRSDATEN**
METHOD FOR PROVIDING TRAFFIC INFORMATION
PROCEDE POUR METTRE A DISPOSITION DES DONNEES CONCERNANT LA CIRCULATION ROUTIERE

(30) Priorität: 25.07.2000 DE 10036466; 07.03.2001 DE 10110901
(43) Veröffentlichungstag der Anmeldung: 02.05.2003
(73) Patentinhaber: Deutsche Telekom AG, 53113 Bonn (DE)
(72) Erfinder: WILLENBROCK, Ralf, 10965 Berlin (DE)
(86) Internationale Anmeldenummer: PCT/EP2001/008047
(87) Internationale Veröffentlichungsnummer: WO 2002/008695

(56) Entgegenhaltungen:
- EP-A- 0 715 286
- EP-A- 0 921 509
- WO-A-99/24952
- US-A- 5 933 100
- US-A- 5 948 042
- US-A- 6 061 625

## Beschreibung

Die Erfindung betrifft ein Verfahren zum Bereitstellen von Verkehrsdaten, welche die Verkehrssituation auf mindestens einer Strecke eines Straßennetzes repräsentieren, durch mindestens ein sich im Streckennetz bewegendes, als mobiler Detektor arbeitendes Fahrzeug, ein Endgerät in einem als mobiler Detektor arbeitenden Fahrzeug, das zumindest eine Positionsbestimmungseinrichtung aufweist oder mit dieser verbunden ist, eine Speichereinrichtung zum Speichern von Referenzdaten, eine Datenverarbeitungseinrichtung zum Ermitteln von Verkehrsinformationen durch Aufbereiten von erfaßten und/oder daraus abgeleiteten Daten mit Hilfe der abgespeicherten Referenzdaten und eine Einrichtung zum Datenaustausch mit der Zentrale umfaßt, eine Zentrale zur Bereitstellung von Verkehrsdaten, welche die Verkehrssituation auf mindestens einer Strecke und/oder einem Streckenabschnitt eines Streckennetzes, insbesondere eines Straßennetzes repräsentieren, die zumindest von mindestens einem als mobiler Detektor arbeitenden Fahrzeug Daten seiner geographischen Position erhält, und ein Softwareprogrammprodukt.

Bei dem Fahrzeug handelt es sich um ein als mobiler Detektor arbeitendes Fahrzeug einer im fließenden Verkehr mitschwimmenden Stichprobenfahrzeugflotte. Das Fahrzeug ist mit einem Endgerät ausgestattet, um die Verkehrsdaten zu erzeugen und an eine Zentrale mobil zu übertragen. Zur Erzeugung der Verkehrsdaten erfassen Sensoren, welche dem Endgerät des Fahrzeugs zugeordnet sind, Daten, welche das Fahrverhalten des Fahrzeugs repräsentieren. Bei diesen Daten handelt es sich insbesondere um ein sogenanntes Fahrprofil, das heißt einen Geschwindigkeitszeitverlauf des Fahrzeugs. Das Endgerät bereitete diese Fahrzeugdaten mit Hilfe von Referenzdaten, welche beispielsweise von der Zentrale an das Endgerät mobil übertragen und in dem Endgerät gespeichert worden sind, auf, um auf diese Weise die gewünschten Verkehrsdaten bereitzustellen. Schließlich werden diese im Endgerät des Fahrzeugs erzeugten Verkehrsdaten per Mobilfunk an die Zentrale übermittelt.

US 5933100 offenbart ein Verkehrsdatenerfassungsverfahren gemäß dem Floating Car Data (FCD) Prinzip.

Ein derartiges Verfahren sowie ein entsprechendes Endgerät für ein Fahrzeug und die entsprechende Zentrale sind aus dem Stand der Technik bekannt und z.B. in der Deutschen Offenlegungsschrift DE 195 21 919 A1 offenbart. Diese Offenlegungsschrift lehrt, Fahrzeugdaten, d.h. Informationen über den Betriebszustand und/oder über die Umgebung des Fahrzeugs im Fahrzeug selber zu erfassen und dort aufzubereiten, indem die erfaßten Daten einer vorgegebenen Klasse, d.h. einem vorgegebenen Fahrzeugverhaltensmuster zugeordnet werden. Die vorgegebenen Fahrzeugsverhaltensmuster können z.B. per Funktelefon oder einer anderen Drahtlosverbindung von einem Verkehrsrechner an das Fahrzeug übertragen werden.

Die genannte Offenlegungsschrift sieht vor, daß die Fahrzeugverhaltensmuster in Abhängigkeit vom Straßentyp, d.h. in Abhängigkeit davon, ob sich das Fahrzeug auf einer Autobahn, einer Landstraße oder einer Straße innerhalb geschlossener Ortschaften befindet, bestimmt werden. Eine derartige Klassifizierung der Fahrzeugverhaltensmuster erlaubt jedoch nur eine ungenaue Aufbereitung bzw. Auswertung der Fahrzeugdaten in Hinblick auf die zu ermittelnde Verkehrssituation auf der Straße, auf welcher sich das Fahrzeug gerade befindet. Anders ausgedrückt, die durch eine derartige Aufbereitung oder Auswertung ermittelten Verkehrsdaten enthalten in der Regel einen beachtlichen Anteil irrelevanter Informationen, welcher entweder überflüssig für die Beschreibung einer bestimmten Verkehrssituation ist oder diese möglicherweise sogar verfälscht.

Ausgehend von diesem Stand der Technik ist es die Aufgabe der Erfindung, ein Verfahren zum Bereitstellen von Verkehrsdaten durch ein als mobiler Detektor arbeitendens Fahrzeug sowie ein Endgerät und eine Zentrale in der Weise weiterzubilden, daß die bereitgestellten Verkehrsdaten aussagekräftiger und kompakter im Hinblick auf die von ihnen zu repräsentierende Verkehrssituation sind.

Die Aufgabe wird durch die Merkmale der Patentansprüche 1 bis 10, 11, 12 und 20 gelöst. Vorteilhafte Aus- und Weiterbildungen sind in den Unteransprüchen dargestellt.

Gemäß der Erfindung werden von der Zentrale als Referenzdaten neben Fahrprofildaten wie z. B. Geschwindigkeitsdaten, auch Streckeninformationen über Strecken und/oder Streckenabschnitte des Streckennetzes an die als mobile Detektoren arbeitenden Fahrzeuge gesendet. Diese Streckeninformationen enthalten vorzugsweise Streckeninformationen eines Erfassungsnetzes.

Mit Strecken und Streckenabschnitte sind im Rahmen der Erfindung vorzugsweise Straßen und Wege bzw. Teile davon gemeint, welche mit Fahrzeugen, insbesondere Kraftfahrzeugen befahren werden können.

Mit Streckeninformationen sind insbesondere solche Informationen über Straßen und Wege gemeint, welche in einer normalen Straßenkarte hinterlegt sind. Dabei handelt es sich insbesondere um Angaben zum Straßentyp, d.h. ob es sich um eine Autobahn, eine Landstraße oder ein Straße innerorts handelt, um Daten über den Straßenverlauf oder über Straßenkreuze. Solche Daten beziehen sich beispielsweise auf ein Erfassungsnetz mit Strecken und/oder Streckenabschnitten des Staßennetzes, auf denen eine Ermittlung von Verkehrsdaten erfolgen soll. Ein solches Erfassungsnetz ist beispielsweise in der WO 01/35370 A1 beschrieben. Darüber hinaus können die Streckeninformationen jedoch auch zusätzliche Angaben, wie z.B. die Position von Raststätten, Parkplätzen, Ampeln oder andere Besonderheiten der Strecke oder deren Umgebung beinhalten.

Das oben beschriebene erfindungsgemäße Verfahren sieht vor, daß die von dem als mobiler Detektor arbeitenden Fahrzeug ermittelten Daten unter Berücksichtigung der Streckeninformationen ausgewertet werden. Die Auswertung erfolgt durch FCD-Verfahrensalgorithmen, welche erfindungsgemäß speziell zur Berücksichtigung der Streckeninformationen ausgebildet sind. Dadurch wird es vorteilhafterweise möglich, lokale Besonderheiten in der Umgebung der aktuellen Position des Fahrzeugs bei der Aufbereitung der Daten zu berücksichtigen. Auf diese Weise wird es möglich, irrelevante Informationen, wie z.B. Stillstandszeiten vor Ampeln, bei der Aufbereitung der Daten heraus zu filtern und erst gar nicht als Verkehrsdaten an die Zentrale zu übermitteln.

Die Streckeninformationen im Endgerät erlauben also eine Vorfilterung von Daten bei der Erzeugung der Verkehrsdaten, so daß diese aussagekräftiger und zuverlässiger im Hinblick auf die von ihnen zu repräsentierenden Verkehrssituation, z.B. Stau auf einer bestimmten Strecke, werden. Darüber hinaus sind die erfindungsgemäß erzeugten Verkehrsdaten auch kompakter, d.h. sie liefern mehr aussagekräftige Informationen bei einem geringeren Anteil irrelevanter Informationen und benötigen aus diesem Grunde auch weniger Übertragungskapazität auf dem Nachrichtenkanal, auf welchem sie vom Fahrzeug zu der Zentrale übertragen werden.

Gemäß einem ersten Ausführungsbeispiel der Erfindung ist es vorteilhaft, wenn sich die im Endgerät des als mobilen Detektor arbeitenden Fahrzeuges gespeicherte Streckeninformation nur auf ein lokal begrenztes Gebiet um die aktuelle Position und/oder die Fahrtroute des Fahrzeugs bezieht. Dies hat den Vorteil, daß der in dem Endgerät vorzusehende Speicherplatz wesentlich geringer sein kann, als wenn dort die Straßeninformationen von einem ganzen Staat oder sogar von einem ganzen Kontinent, z.B. von Europa oder von Amerika, gespeichert werden müßten. Die geringe vorzusehende Speicherkapazität ist insbesondere von Vorteil bei der Serienproduktion derartiger Endgeräte oder Fahrzeuge, weil auf diese Weise ein wesentlich besseres Preis-Leistungs-Verhältnis erzielt werden kann.

Wenn in dem Endgerät vorgesehen ist, daß dort nur Streckeninformationen über ein lokal begrenztes Gebiet gespeichert sind, dann ist es vorteilhaft, wenn das Gebiet und die dem Gebiet zugeordneten Streckeninformationen zu gegebener Zeit an die aktuelle Position des Fahrzeugs angepaßt werden können. Nur auf diese Weise kann sichergestellt werden, daß die erzeugten Verkehrsdaten die gewünschten Eigenschaften, nämlich Aussagekraft und Kompaktheit auch bei geänderter Fahrzeugposition beibehalten.

Eine derartige Anpassung der Streckeninformationen an ein neu definiertes Gebiet bzw. an eine geänderte Position des Fahrzeugs kann entweder durch einen kompletten Austausch der bisher in dem Endgerät gespeicherten Streckeninformationen oder durch zumindest teilweises Überschreiben von bereits in dem Endgerät gespeicherten Streckeninformationen erfolgen.

Eine Ausbildung der Erfindung sieht vor, daß nach einem Startvorgang des als mobiler Detektor arbeitenden Fahrzeuges die Referenzdaten, einschließlich die Streckeninformationen von der Zentrale an das Fahrzeug übertragen werden. Dabei kann durch den Startvorgang automatisch eine Anforderung vom Fahrzeug an die Zentrale gesendet werden. Dem Fahrzeug stehen somit bei Beginn der Fahrt notwendige Informationen zur Verfügung.

Eine Weiterbildung der Erfindung sieht vor, daß die Zentrale bei Änderungen der Referenzdaten und/oder weiterer Daten, vorzugsweise bei Änderungen von Informationen über das Verkehrs- oder Erfassungsnetzes und/oder der umgebenden Infrastruktur und/oder bei Änderungen von Verkehrsdaten automatisch an die entsprechenden als mobile Detektoren arbeitenden Fahrzeuge aktualisierte Referenzdaten, insbesondere Streckeninformationen, überträgt.

Desweiteren kann vorgesehen sein, daß die Zentrale auf Anforderung eines als mobiler Detektor arbeitenden Fahrzeuges Referenzdaten, insbesondere Streckeninformationen, an das Fahrzeug sendet. Es besteht gemäß der Erfindung weiterhin die Möglichkeit, daß die Zentrale in definierten Zeitabständen Referenzdaten, vorzugsweise für einen definierten Bereich, sendet, die dann von den sich in diesem Bereich befindlichen Fahrzeugen empfangen werden.

Eine weitere Reduktion des in dem Endgerät erforderlichen Speicherplatzes kann dadurch erzielt werden, daß sich die Streckeninformationen nicht auf das gesamte vorher definierte Gebiet um die aktuelle Position des Fahrzeugs beziehen, sondern lediglich auf einzelne vorbestimmte Strecken in diesem Gebiet, auf welchen überhaupt nur eine Verkehrsdatenerfassung stattfinden soll. Eine derartige Beschränkung der Streckeninformationen kann sich insbesondere an den Wünschen der Kunden der Verkehrszentrale, z.B. einer Rundfunkanstalt oder eines Automobilclubs orientieren, welche eine Überwachung der Verkehrssituation lediglich auf ausgewählten Strecken wünschen. Als weiterer Vorteil dieser Beschränkung ist wiederum die Vermeidung von irrelevanten Verkehrsdaten und damit wiederum eine Verringerung der erforderlichen Übertragungskapazität für den Nachrichtenkanal zwischen Kraftfahrzeug und Zentrale zu nennen.

Eine Weiterbildung sieht vor, daß die Auswahl der vorbestimmten Strecken und/oder Streckenabschnitte, für welche Referenzdaten von der Zentrale gesendet werden, in Abhängigkeit der Infrastruktur und/oder in Abhängigkeit des Straßentypes der Strecken und/oder in Abhängigkeit bereits bekannter Verkehrsdaten des Straßennetzes erfolgt. Dabei kann die Auswahl auch zeitabhängig erfolgen. So können z. B. im Berufsverkehr andere Strecken und/oder Streckenabschnitte ausgewählt werden, als an Feiertagen. Zum Ferienbeginn kann die Auswahl wiederum vollkommen anders aussehen.

Die Übertragung der Referenzdaten von der Zentrale an die als mobile Detektoren arbeitenden Fahrzeuge erfolgt vorzugsweise per Mobilfunk, insbesondere über einen Short-Message-Service (SMS) oder per Broadcast-Verfahren, beispielsweise ein Cell-Broadcast-Verfahren.

Die oben genannte Aufgabe der Erfindung wird weiterhin durch ein in einem als mobiler Detektor arbeitenden Fahrzeug (FCD-Fahrzeug) eingebautes Endgerät gemäß Patenanspruch 11 gelöst. Im Unterschied zu den aus dem Stand der Technik bekannten Endgeräten, ist die Aufbereitungseinrichtung des erfindungsgemäßen Endgerätes vorzugsweise dazu ausgebildet, dass die Aufbereitung der erfaßten Daten unter Berücksichtigung der erfindungsgemäß verfügbaren Streckeninformationen vorgenommen wird.

Ansonsten entsprechen die Vorteile des Endgerätes den oben im Hinblick auf das Verfahren genannten Vorteilen.

Die oben genannte Aufgabe der Erfindung wird weiterhin durch eine Zentrale gemäß Patentanspruch 14 gelöst. Dabei ist die Zentrale erfindungsgemäß derart ausgebildet, daß von der Zentrale Streckeninformationen über Strecken und/oder Streckenabschnitte des Straßennetzes zusammen mit weiteren Referenzdaten an die als mobile Detektoren arbeitende Fahrzeuge sendbar sind und/oder gesendet werden. Die Zentrale ist im wesentlichen ein Verkehrsrechner. Sie zeichnet sich dadurch aus, daß sie eine Auswerteeinrichtung aufweist, welche nicht nur die aktuelle Position des FCD-Fahrzeugs aus den empfangenen Verkehrsdaten ermittelt, sondern darüber hinaus auch das oben bereits erwähnte geographische, FCD-relevante Gebiet definiert und die entsprechenden Streckeninformationen über Strecken in diesem Gebiet zur Übertragung an das Endgerät in dem Fahrzeug bereitstellt.

Nach einer Weiterbildung der erfindungsgemäßen Zentrale beziehen sich die von der Zentrale an die als mobile Detektoren arbeitenden Fahrzeuge zu sendenden oder gesendeten Streckeninformationen auf ein lokal begrenzten Teilbereich des Straßennetzes, welcher die aktuelle Position des Fahrzeuges, für das die Streckeninformationen bestimmt sind, einschließt oder in deren Nähe liegt. Der Teilbereich des Straßennetzes, für den an das Fahrzeug Streckeninformationen übertragen werden, kann auch von der vorbestimmten Route des Fahrzeuges abhängig sein und muß dabei nicht unbedingt nur die momentane Position des Fahrzeuges betreffen.

Nach einer weiteren Ausbildung der Erfindung ist die Zentrale so ausgebildet, daß die an ein bestimmtes Fahrzeug zu sendenden und/oder gesendeten Streckeninformationen an eine veränderte Position des Fahrzeuges angepaßt werden können. Mit anderen Worten verläßt das Fahrzeug ein Gebiet, für das es Streckeninformationen im Endgerät gespeichert hat, oder ist es im Begriff dazu, erhält es neue Referenzdaten von der Zentrale. Dies kann auf Anforderung durch das Fahrzeug geschehen. Die Streckeninformationen werden hier vorzugsweise über ein Point-To-Point-Verfahren gesendet. Eine andere Möglichkeit besteht darin, daß die Zentrale die Streckeninformationen in bestimmten Zeitabständen überträgt, wobei diese Streckeninformationen im wesentlichen in dem Gebiet gesendet werden, für das sie gelten. Hierbei kann insbesondere ein Cell-Broadcast-Verfahren eingesetzt werden.

Die Aufgabe wird weiterhin durch ein Softwareprogrammprodukt gelöst, das direkt in einen internen Speicher der Zentrale oder des Endgerätes eines als mobiler Detektor arbeitenden Fahrzeuges ladbar ist und Programmabschnitte umfaßt, mit denen die Verfahrensschritte gemäß einem der Ansprüche 1 bis 10 ausgeführt werden und/oder ausführbar sind, wenn das Programmprodukt in der Zentrale und/oder im Endgerät des als mobiler Detektor arbeitenden Fahrzeuges läuft.

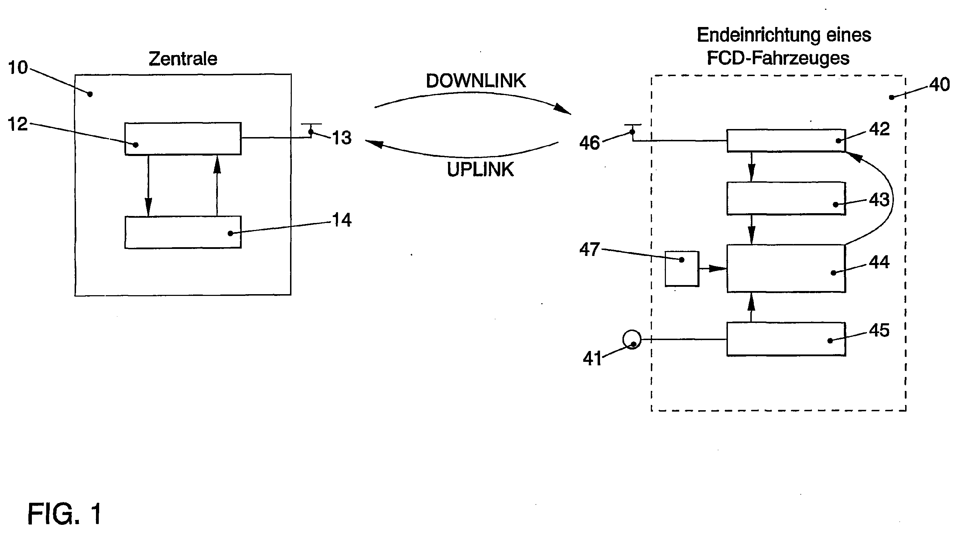

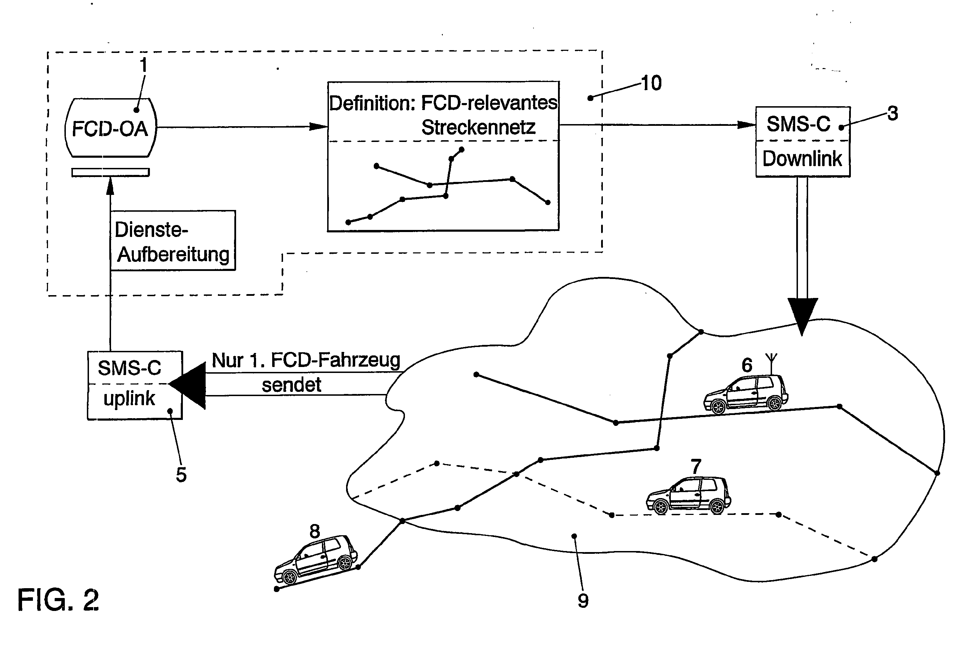

Es folgt eine detaillierte Beschreibung bevorzugter Ausführungsbeispiele der Erfindung unter Bezugnahme auf die der Beschreibung beigefügten Figuren 1 und 2.
- Fig. 1: zeigt den strukturellen Hardwareaufbau einer Zentrale 10 und eines Endgerätes 40 in einem Fahrzeug gemäß der vorliegenden Erfindung;
- Fig. 2: zeigt das Zusammenwirken der Zentrale 10 und des Endgerätes 40 gemäß der vorliegenden Erfindung.

In Fig. 1 ist zu erkennen, daß eine Zentrale 10 gemäß der Erfindung eine Kommunikationseinrichtung 12 zum Empfangen von Verkehrsdaten von mindestens einem als mobiler Detektor arbeitendem Fahrzeug (UPLINK) und zum Senden von Referenzdaten an das als mobiler Detektor arbeitende Fahrzeug (FCD- Fahrzeug) (DOWNLINK) aufweist. Dabei erfolgen der Empfang und das Senden der Daten über eine der Kommunikationseinrichtung 12 zugeordnete Mobilfunkantenne 13, vorzugsweise in Form von Datentelegrammen gemäß dem Global System for Mobil Communications GSM als aktuellem Mobilfunkstandard.

Die von dem Fahrzeug empfangenen Verkehrsdaten werden von der Kommunikationseinrichtung 12 innerhalb der Zentrale 10 an eine Auswerteeinrichtung 14 weitergeleitet, welche Teil eines Verkehrsrechners ist und aus den Verkehrsdaten zunächst die aktuelle Position des als mobiler Detektor arbeitenden Fahrzeug 6,7,8 selektiert. Auf Basis dieser aktuellen Position des als mobiler Detektor arbeitenden Fahrzeugs definiert die Auswerteeinrichtung 14 ein geographisches, d.h. ein zur Ermittlung von Verkehrsdaten relevantes Gebiet 9, welches die aktuelle Position des Fahrzeugs einschließt oder in der Umgebung von dessen aktueller Position liegt und stellt Streckeninformationen über Strecken in diesem Gebiet zusammen. Die Streckeninformationen umfassen im wesentlichen Angaben wie sie aus einem Straßenatlas bekannt sind. Darüber hinaus können sie allerdings auch zusätzliche Informationen wie z.B. die Positionen von Ampeln oder Parkplätzen oder auch bekannten Baustellen etc. beinhalten. Streckeninformationen werden von der Auswerteeinrichtung 14 vorzugsweise nach den Wünschen von Kunden in der Zentrale 10 zusammengestellt, welche Verkehrsdaten z.B. nur über die von ihnen vorbestimmten Strecken in dem definierten Gebiet 9 wünschen. Schließlich werden die von der Auswerteeinrichtung 14 bereitgestellten gebietsspeziffschen Streckeninformationen über die Kommunikationseinrichtung 12 und die Antenne 13 als sogenannte Referenzdaten per Mobilfunk an die Endeinrichtung 40 desjenigen FCD-Fahrzeugs 6,7,8 übertragen, im Hinblick auf dessen aktuelle Position das Gebiet 9 definiert wurde.

Die übertragenen Referenzdaten werden in dem als mobiler Detektor arbeitenden Fahrzeug 6,7,8 von einer Antenne 46 und einer der Endeinrichtung 40 zugeordneten Kommunikationseinrichtung 42 empfangen, um nachfolgend in einer Speichereinrichtung 43 der Endeinrichtung gespeichert zu werden. Die Speichereinrichtung umfaßt vorzugsweise eine Datenbank, welche vor der ersten Übertragung von Referenzdaten leer ist und bei späteren Aktualisierungen der Referenzdaten überschrieben werden kann. Das Endgerät 40 des als mobiler Detektor arbeitenden Fahrzeugs 6,7,8 ist weiterhin eine Erfassungseinrichtung 45 zugeordnet, welche Daten über das Fahrverhalten des Fahrzeugs oder dessen Umgebung mit Hilfe von Sensoren 41 erfaßt. Die von der Erfassungseinrichtung 45 erfaßten Daten werden in einer Datenverarbeitungseinrichtung 44 der Endeinrichtung 40 unter Berücksichtigung der in der Speichereinrichtung 43 gespeicherten Referenzdaten, d.h. insbesondere der Streckeninformationen aufbereitet oder ausgewertet, um auf diese Weise Verkehrsdaten zu erzeugen. Die Verkehrsdaten sollen dabei eine aussagekräftige Information über die aktuelle Verkehrssituation auf derjenigen Strecke widerspiegeln, auf der sich das Fahrzeug aktuell befindet. Die Auswertung erfolgt in der Aufbereitungseinrichtung 44 vorzugsweise mit Hilfe von bekannten FCD- Verfahrensalgorithmen (DE 100 35 501), welche erfindungsgemäß zur Berücksichtigung der Streckeninformation ausgebildet sind und z.B. in Form von Softwareprogrammen in der Aufbereitungseinrichtung 44 zur Verfügung stehen. Die von der Aufbereitungseinrichtung 44 schließlich erzeugten Verkehrsdaten enthalten u.a. auch Angaben über die aktuellen Position des Fahrzeugs, welche mit Hilfe eines z.B. auf Basis des satelliten-gestützten Global Positioning System GPS arbeitenden Lokalisierungsmoduls 47 ermittelt worden sind.

Die von der Aufbereitungseinrichtung 44 erzeugten Verkehrsdaten werden schließlich über die Kommunikationseinrichtung 42 der Endeinrichtung 40 und die fahrzeugseitige Antenne 46 an die Zentrale 10 übertragen und dort von der Antenne 13 und der Kommunikationseinrichtung 12 empfangen.

Fig. 2 veranschaulicht verschiedene Einzelheiten des erfindungsgemäßen Verfahrens zum Bereitstellen von Verkehrsdaten. So ist dort zu erkennen, daß die Auswertung der von den als mobilen Detektor arbeitenden Fahrzeugen 6, 7, 8 empfangen Verkehrsdaten und die Definition der geographischen Gebiete in der Zentrale 10 nicht notwendigerweise nur automatisch durch die Auswerteeinrichtung 14 erfolgen muß, sondern auch individuellen Entscheidungen eines Verkehrsredakteurs unterliegen kann. Dieser kann z.B. über ein Terminal 1 eines Verkehrsrechners, welchem die Auswerteeinrichtung 14 zugeordnet ist, Einfluß nehmen, auf die Definition des oben besprochenen geographischen Gebietes 9 und auf die Definition des zur Ermittlung von Verkehrsdaten relevanten Streckennetzes (FCD-Streckennetz) innerhalb dieses Gebietes. Die zur Ermittlung von Verkehrsdaten relevante Streckeninformation zu ausgewählten relevanten Strecken wird, wie oben beschrieben, z.B. über ein Short-Message-Service Centre SMS-C 3, 5 an die Endeinrichtung 40 eines als mobiler Detektor arbeitenden Fahrzeugs 6, 7, 8 übertragen. Die Auswerteeinrichtung 44 im Endgerät 40 des Fahrzeugs 6, 7, 8 ist nun in der Lage, festzustellen, ob sich das Fahrzeug 6, 7, 8 aktuell überhaupt in dem definierten Gebiet 9 aufhält oder nicht. Wenn dies nicht der Fall ist, wie z.B. bei dem in Fig. 2 gezeigten Fahrzeug 3, dann wird die in der Endeinrichtung 40 des Fahrzeugs vorhandene Kommunikationseinrichtung 42 für die Übertragung an die Zentrale 10 gesperrt. Gleichermaßen wird die Übertragungsfunktion für Verkehrsdaten vorzugsweise bei Fahrzeugen wie dem in Fig. 2 gezeigten Fahrzeug 2 gesperrt, welche feststellen, daß sie sich zwar innerhalb des definierten Gebietes 9, aber auf einer nicht zur Beobachtung bestimmten Strecke oder Straße (gestrichelte Linie) befinden. Vorzugsweise wird die Kommunikationseinrichtung 42 und die Mobilfunkantenne 46 nur in den Fällen zur Übertragung an die Zentrale freigeschaltet, in denen die Endeinrichtung im Fahrzeug 6, 7, 8 feststellt, daß sich das Fahrzeug sowohl innerhalb des Gebietes 9 wie auch auf einer zur Beobachtung der Verkehrssituation relevanten bzw. freigegebenen Strecke befindet; in Fig. 2 trifft dies nur auf das Fahrzeug 6 zu. Die Feststellung, ob sich ein Fahrzeug innerhalb des definierten, zur Ermittlung von Verkehrsdaten relevanten Gebietes 9 und sogar auf einer der vorbestimmten Strecken (durchgezogene Linien) innerhalb dieses Gebietes 9 befindet, kann durch die Aufbereitungseinrichtung 44 erfolgen. Zu diesem Zweck führt die Aufbereitungseinrichtung 44 einen Vergleich zwischen der von dem Lokalisierungsmodul47 gelieferten aktuellen Position des Fahrzeugs 6, 7, 8 mit den in der Speichereinrichtung 43 hinterlegten Informationen über das definierte Gebiet 9 und die relevanten Strecken innerhalb dieses Gebietes durch.

Wenn auch die Kommunikationseinrichtung 42 innerhalb der Endeinrichtung 40 eines Fahrzeugs 7, 8 in den genannten Fällen für die Übertragung von Verkehrsdaten an die Zentrale gesperrt ist, so ist diese Kommunikationseinrichtung 42 vorzugsweise jedoch immer empfangsbereit für von der Zentrale 10 übermittelte Gebietsdefinitionen und die zugehörigen Streckeninformationen. Auf diese Weise wird es einem Fahrzeug, welches sich wie das Fahrzeug 8 in Fig. 2 zeitweise außerhalb des definierten Gebietes befindet, zu einem späteren Zeitpunkt immer wieder möglich, zu überprüfen, ob es sich nicht wieder in einem neu definierten Gebiet 9 befindet. Sobald dies wieder der Fall ist, und sich das Fahrzeug außerdem auf einer der in diesem Gebiet definierten relevanten Strecken befindet, wird das Fahrzeug vorzugsweise wieder zur Übermittlung von Verkehrsdaten an die Zentrale 10 freigeschaltet.

Es versteht sich von selbst, daß einzelne Einrichtungen bzw. Funktionen des Endgerätes 40 nicht notwendigerweise im Endgerät selber implementiert sein müssen. So ist es stattdessen möglich, das einzelne dieser Einrichtungen, sofern sie bei anderen im Fahrzeug bereits vorhandenen Geräten verfügbar sind, mitbenutzt werden. Beispielsweise kann die Funktion Kommunikationseinrichtung 42 des Endgerätes durch Zugriff auf ein im Fahrzeug bereits vorhandenes GSM-Mobilfunktelefon realisiert werden. Ebenso kann die Funktion des GPS-Lokalisierungsmoduls 47 durch Zugriff auf eine gleichwirkende Einrichtung eines ggf. im Fahrzeug 6, 7, 8 vorhandenen Navigationssystems realisiert werden.

Zusammenfassend ist festzustellen, daß durch die vorliegende Erfindung das Aufkommen von Verkehrsdaten, welche von als mobilen Detektor arbeitenden Fahrzeugen 6, 7, 8 an eine Zentrale 10 gemeldet werden, erheblich reduziert wird. Dies kommt insbesondere den Betreibern der Zentrale 10, d.h. einem Anbieter von Verkehrsinformationen, zu Gute, weil sich auf diese Weise die von ihm auszuwertende Datenmenge gleichermaßen reduziert. Für einen Automobilhersteller bzw. Hersteller der Endeinrichtung 40 in dem Fahrzeug erfordert die Umsetzung der Erfindung keine Änderung der Hardware, sondern lediglich geringfügige Änderungen in den FCD-Verfahrensalgorithmen. Diese müssen nunmehr in die Lage versetzt werden, die vom Fahrzeug selber erfaßten Daten mit den erfindungsgemäß definierten, von der Zentrale 10 an das Fahrzeug übermittelten Streckeninformationen aufzubereiten und auszuwerten. Sowohl für die Übertragung von Verkehrsdaten von dem Fahrzeug zu der Zentrale 10 wie auch für die Übertragung von Streckeninformationen von der Zentrale 10 zu den Fahrzeugen 6, 7, 8 empfiehlt sich die Definition geeigneter FCD-Datentelegramme, welche alle erforderlich Informationen beinhalten.

Wenn auch der Gegenstand der vorliegenden Erfindung zuvor anhand des Straßennetzes als Streckennetz beschrieben worden ist, so sei jedoch betont, daß sich dieser Gegenstand grundsätzlich auch auf andere Strecken bzw. Streckennetze anwenden läßt, wie z.B. auf ein Schienennetz. In diesem Fall würde es sich bei den erwähnten als mobile Detektoren arbeitenden Fahrzeugen 6, 7, 8 nicht um Kraftfahrzeuge, sondern um Schienenfahrzeuge handeln.

## Patentansprüche

1. Verfahren zum Bereitstellen von Verkehrsdaten, welche die Verkehrssituation auf mindestens einer Strecke eines Streckennetzes, insbesondere eines Straßennetzes, repräsentieren, durch mindestens ein sich in dem Streckennetz bewegendes, als mobiler Detektor arbeitendes Fahrzeug (6, 7, 8), umfassend die folgenden Schritte:
Erfassen von Daten im Fahrzeug (6, 7, 8), welche das Fahrverhalten und/oder die Umgebung des Fahrzeugs repräsentieren;
Erzeugen der Verkehrsdaten durch Aufbereiten der erfaßten Daten mit Hilfe von Referenzdaten, welche von einer Zentrale (10) an das Fahrzeug (6, 7, 8) übertragen werden und in dem Fahrzeug gespeichert sind; und
Übertragen der Verkehrsdaten an die Zentrale (10), wobei es sich bei den Referenzdaten zumindest teilweise um Streckeninformationen über Strecken und/oder Streckenabschnitte des Streckennetzes handelt,
**dadurch gekennzeichnet, daß**
sich die Streckeninformationen auf ein zuvor definiertes, lokal begrenztes Gebiet (9) beziehen, welches die aktuelle Position des als mobiler Detektor arbeitendes Fahrzeugs (6, 7, 8) einschließt oder in deren Nähe liegt und sich die Streckeninformationen nur auf einzelne vorbestimmte Strecken und/oder Streckenabschnitte in dem definierten Gebiet (9) beziehen, auf welchen überhaupt eine Verkehrsdatenerfassung stattfinden soll.

2. Verfahren nach Anspruch 1, **dadurch gekennzeichnet, daß** das im Endgerät (40) gespeicherte Gebiet (9) mit den dazugehörigen Streckeninformationen an eine veränderte aktuelle Position des Fahrzeugs (6, 7, 8) angepaßt wird.

3. Verfahren nach Anspruch 2, **dadurch gekennzeichnet, daß** die Anpassung der Streckeninformation an das neudefinierte Gebiet (9) entweder durch einen kompletten Austausch der bisher in dem Endgerät (40) gespeicherten Streckeninformationen oder durch zumindest teilweises Überschreiben von bereits in dem Endgerät (40) gespeicherten Streckeninformationen erfolgt.

4. Verfahren nach einem der Ansprüche 1 bis 3, **dadurch gekennzeichnet, daß** die Zentrale (10) in Abhängigkeit eines Startvorganges des als mobiler Detektor arbeitenden Fahrzeuges (6, 7, 8) Referenzdaten, insbesondere die Streckeninformationen, an das Fahrzeug (6, 7, 8) überträgt.

5. Verfahren nach einem der Ansprüche 1 bis 4, **dadurch gekennzeichnet, daß** die Zentrale (10) in Abhängigkeit von Änderungen von Informationen über das Verkehrsnetz und/oder der umgebenden Infrastruktur und/oder in Abhängigkeit von Änderungen der Informationen über Verkehrszustände Referenzdaten, insbesondere Streckeninformationen, an das als mobiler Detektor arbeitende Fahrzeug (6, 7, 8) überträgt..

6. Verfahren nach einem der Ansprüche 1 bis 5, **dadurch gekennzeichnet, daß** die Zentrale (10) auf Anforderung des als mobilen Detektor arbeitenden Fahrzeuges (6,7, 8) Referenzdaten, insbesondere Streckeninformationen, an das Fahrzeug überträgt.

7. Verfahren nach einem der Ansprüche 1 bis 6, **dadurch gekennzeichnet, daß** die Zentrale (10) in definierten Zeitabständen Referenzdaten, insbesondere Streckeninformationen, an das als mobiler Detektor arbeitende Fahrzeug (6, 7, 8) überträgt.

8. Verfahren nach einem der vorangegangenen Ansprüche, **dadurch gekennzeichnet, daß** die Auswahl der vorbestimmten Strecken und/oder Streckenabschnitte in Abhängigkeit der Infrastruktur des definierten Gebietes (9) und/oder in Abhängigkeit des Straßentyps der Strecken und/oder in Abhängigkeit bereits bekannter Verkehrsdaten des Streckennetzes erfolgt.

9. Verfahren nach einem der Ansprüche 1 bis 8, **dadurch gekennzeichnet, daß** die Streckeninformationen zumindest Daten der Anfangs- und Endpunkte der Strecken und/oder Streckenabschnitte beinhalten.

10. Verfahren nach einem der Ansprüche 1 bis 9, **dadurch gekennzeichnet, daß** die Übertragung der Referenzdaten von der Zentrale (10) an das Endgerät (40) des Fahrzeuges (6, 7, 8) und/oder die Übertragung der Verkehrsdaten von dem Endgerät (40) an die Zentrale (10) per Mobilfunk oder per Broadcast erfolgt.

11. Endgerät (40) in einem als mobiler Detektor arbeitenden Fahrzeug (6, 7, 8) einer Stichprobenflotte, das zumindest eine Positionsbestimmungseinrichtung (45) aufweist oder mit dieser verbunden ist, eine Speichereinrichtung (43) zum Speichern von Referenzdaten, eine Datenverarbeitungseinrichtung (44) zum Ermitteln von Verkehrsinformationen durch Aufbereiten von erfaßten und/oder daraus abgeleiteten Daten mit Hilfe der abgespeicherten Referenzdaten und eine Einrichtung zum Datenaustausch mit der Zentrale (10) umfaßt, **dadurch gekennzeichnet, daß** das Endgerät (40) zur Durchführung des Verfahrens nach einem der Ansprüche 1 bis 10 ausgebildet ist, und dazu Mittel umfasst zum Bezug der zu sendenden Streckeninformationen auf ein zuvor definiertes, lokal begrenztes Gebiet (9), welches die aktuelle Position des als mobiler Detektor arbeitendes Fahrzeugs (6, 7, 8) einschließt oder in deren Nähe liegt und weitere Mittel umfasst die Streckeninformationen nur auf einzelne vorbestimmte Strecken und/oder Streckenabschnitte in dem definierten Gebiet (9) beziehen, auf welchen überhaupt eine Verkehrsdatenerfassung stattfinden soll.

12. Zentrale (10) zur Bereitstellung von Verkehrsdaten, welche die Verkehrssituation auf mindestens einer Strecke und/oder eines Streckenabschnittes eines Streckennetzes, insbesondere eines Straßennetzes repräsentieren, die zumindest von mindestens einem als mobiler Detektor arbeitenden Fahrzeug (6, 7, 8) Daten seiner geographischen Position erhält, wobei die Zentrale (10) derart ausgeführt ist, daß von der Zentrale (10) Streckeninformationen über Strecken und/oder Streckenabschnitte des Streckennetzes an die als mobile Detektoren arbeitende Fahrzeuge (6, 7, 8) sendbar sind und/oder gesendet werden,
**dadurch gekennzeichnet, daß**
sich die an ein als mobiler Detektor arbeitendes Fahrzeug (6, 7, 8) zu sendenden oder gesendeten Streckeninformationen auf ein lokal begrenztes Gebiet (9) beziehen,
welches die aktuelle Position des Fahrzeuges (6, 7, 8), für das die Streckeninformationen bestimmt sind, einschließt oder in deren Nähe liegt und sich die zu sendenden oder gesendeten Streckeninformationen nur auf einzelne vorbestimmte Strecken und/oder Streckenabschnitte in einem definierten Gebiet (9) beziehen, auf welchen überhaupt eine Verkehrsdatenerfassung der als mobile Detektoren arbeitenden Fahrzeuge (6, 7, 8) stattfinden soll.

13. Zentrale (10) nach Anspruch 12, **dadurch gekennzeichnet, daß** die Zentrale (10) derart ausgebildet ist, daß die an ein bestimmtes Fahrzeug (6, 7, 8) zu sendenden und/oder gesendete Streckeninformationen an eine, veränderte Position des Fahrzeuges (6, 7, 8) angepaßt werden.

14. Zentrale (10) nach einem der Ansprüche 12 oder 13, **dadurch gekennzeichnet, daß** die Zentrale (10) in Abhängigkeit von Änderungen von Informationen über das Verkehrsnetz und/oder der umgebenden Infrastruktur und/oder in Abhängigkeit von Änderungen der Informationen über Verkehrszustände Streckeninformationen an mindestens ein als mobiler Detektor arbeitendes Fahrzeug (6, 7, 8) sendet.

15. Zentrale (10) nach einem der Ansprüche 12 bis 14, **dadurch gekennzeichnet, daß** die Zentrale (10) derart ausgebildet ist, daß die Zentrale (10) auf Anforderung Streckeninformationen sendet.

16. Zentrale (10) nach einem der Ansprüche 12 bis 15, **dadurch gekennzeichnet, daß** die Zentrale (10) in definierten Zeitabständen Streckeninformationen an mindestens ein Fahrzeug (6, 7, 8) überträgt.

17. Zentrale (10) nach einem der Ansprüche 12 bis 16, **dadurch gekennzeichnet, daß** die Auswahl der vorbestimmten Strecken und/oder Streckenabschnite in Abhängigkeit der Infrastruktur des definierten Gebietes (9) und/oder in Abhängigkeit des Types der Strecken und/oder in Abhängigkeit bereits bekannter Verkehrsdaten des Streckennetzes erfolgt.

18. Zentrale (10) nach einem der Ansprüche 12 bis 17, **dadurch gekennzeichnet, daß** die Streckeninformationen zumindest Daten der Anfangs- und Endpunkte der Strecken und/oder Streckenabschnitte beinhalten.

19. Zentrale (10) nach einem der Ansprüche 12 bis 18, **dadurch gekennzeichnet, daß** die Streckeninformationen per Mobilfunk oder per Broadcast sendbar sind und/oder gesendet werden.

20. Softwareprogrammprodukt, das direkt in einen internen Speicher der Zentrale (10) oder des Endgerätes (40) eines als mobiler Detektor arbeitenden Fahrzeuges ladbar ist und Programmabschnitte umfaßt, mit denen jeweils die Verfahrensschritte gemäß einem der Ansprüche 1 bis 10 ausgeführt werden und/oder ausführbar sind, wenn das, Programmprodukt in der Zentrale (10) und/oder im Endgerät (40) läuft.

## Claims

1. Method for making available traffic data which represents the traffic situation on at least one route of a route network, in particular of a road network, by means of at least one vehicle (6, 7, 8) which moves in the route network and operates as a mobile detector, comprising the following steps:
acquisition of data in the vehicle (6, 7, 8), which data represents the driving behaviour and/or the surroundings of the vehicle;
generation the traffic data by conditioning the acquired data using reference data which is transmitted from a central station (10) to the vehicle (6, 7, 8) and stored in the vehicle; and
transmission of the traffic data to the central station (10), wherein the reference data is at least partially route information about routes and/or route sections of the route network, **characterized in that** the route information relates to a previously defined, locally limited area (9) which includes the current position of the vehicle (6, 7, 8) which operates as a mobile detector or is located in its vicinity, and the route information relates only to individual predetermined routes and/or route sections in the defined area (9) in which traffic data is intended to be acquired at all.

2. Method according to Claim 1, **characterized in that** the area (9) which is stored in the terminal (40) is adapted with the associated route information to a modified current position of the vehicle (6, 7, 8).

3. Method according to Claim 2, **characterized in that** the route information is adapted to the newly defined area (9), either by completely replacing the route information stored until now in the terminal (40) or by at least partially overwriting route information which has already been stored in the terminal (40).

4. Method according to one of Claims 1 to 3, **characterized in that** the central station (10) transmits reference data, in particular the route information, to the vehicle (6, 7, 8) as a function of a starting process of the vehicle (6, 7, 8) which operates as a mobile detector.

5. Method according to one of Claims 1 to 4, **characterized in that** the central station (10) transmits reference data, in particular route information, as a function of changes in information relating to the traffic network and/or the surrounding infrastructure and/or as a function of changes in the information relating to traffic states, to the vehicle (6, 7, 8) which operates as a mobile detector.

6. Method according to one of Claims 1 to 5, **characterized in that** the central station (10) transmits reference data, in particular route information, to the vehicle at the request of the vehicle (6, 7, 8) which operates as a mobile detector.

7. Method according to one of Claims 1 to 6, **characterized in that** at defined time intervals the central station (10) transmits reference data, in particular route information, to the vehicle (6, 7, 8) which operates as a mobile detector.

8. Method according to one of the preceding claims, **characterized in that** the predetermined routes and/or route sections are selected as a function of the infrastructure of the defined area (9) and/or as a function of the type of roads of the routes and/or as a function of already known traffic data of the route network.

9. Method according to one of the preceding Claims 1 to 8, **characterized in that** the route information contains at least data relating to the start points and end points of the routes and/or route sections.

10. Method according to one of Claims 1 to 9, **characterized in that** the reference data is transmitted from the central station (10) to the terminal (40) of the vehicle (6, 7, 8), and/or the traffic data is transmitted from the terminal (40) to the central station (10) by mobile radio or by broadcast.

11. Terminal (40) in a vehicle (6, 7, 8), operating as a mobile detector, of a sample fleet which has at least one position-determining device (45) or is connected to it, comprises a memory device (43) for storing reference data, a data-processing device (44) for determining traffic information by conditioning acquired data and/or data acquired therefrom, using the stored reference data, and a device for data exchange with the central station (10), **characterized in that** the terminal (40) is designed to carry out the method according to one of Claims 1 to 10, and in addition comprises means for referring the route information to be transmitted to a previously defined, locally limited area (9) which includes the current position of the vehicle (6, 7, 8) which operates as a mobile detector or is located in its vicinity, and comprises further means which relates route information only to individual, predetermined routes and/or route sections in the defined area (9) in which traffic data is intended to be acquired at all.

12. Central station (10) for making available traffic data which represents the traffic situation on at least one route and/or a route section of a route network, in particular a road network, which at least receives, from at least one vehicle (6, 7, 8) which operates as a mobile detector, data relating to the geographic position of said vehicle, wherein the central station (10) is embodied in such a way that route information relating to routes and/or route sections of the route network can be transmitted and/or is transmitted to the vehicles (6, 7, 8) which operate as mobile detectors from the central station (10), **characterized in that** the route information which is to be transmitted or is transmitted to a vehicle (6, 7, 8) which operates as a mobile detector relates to a locally limited area (9) which includes the current position of the vehicle (6, 7) for which the route information is intended or is in the vicinity thereof, and the route information which is to be transmitted or is transmitted relates only to individual, predetermined routes and/or route sections in a defined area (9) in which traffic data of the vehicles (6, 7, 8) which operate as mobile detectors is intended to be acquired at all.

13. Central station (10) according to Claim 12, **characterized in that** the central station (10) is embodied in such a way that the route information which is to be transmitted and/or is transmitted to a specific vehicle (6, 7, 8) is matched to a changed position of the vehicle (6, 7, 8).

14. Central station (10) according to one of Claims 12 or 13, **characterized in that** the central station (10) transmits, as a function of changes in information relating to the traffic network and/or the surrounding infrastructure and/or as a function of changes in the information relating to traffic states, route information to at least one vehicle (6, 7, 8) which operates as a mobile detector.

15. Central station (10) according to one of Claims 12 to 14, **characterized in that** the central station (10) is embodied in such a way that the central station (10) transmits route information on request.

16. Central station (10) according to one of Claims 12 to 15, **characterized in that** the central station (10) transmits route information to at least one vehicle (6, 7, 8) at defined time intervals.

17. Central station (10) according to one of Claims 12 to 16, **characterized in that** the predetermined routes and/or route sections are selected as a function of infrastructure of the defined area (9) and/or as a function of the type of routes and/or as a function of already known traffic data of the route network.

18. Central station (10) according to one of Claims 12 to 17, **characterized in that** the route information contains at least data on the start points and end points of the routes and/or route sections.

19. Central station (10) according to one of Claims 12 to 18, **characterized in that** the route information can be transmitted and/or is transmitted by mobile radio or by broadcast.

20. Software program product which can be loaded directly into an internal memory of the central station (10) or of the terminal (40) of a vehicle which operates as a mobile detector, and which software program product comprises program sections with which the method steps are carried out and/or can be carried out according to one of Claims 1 to 10, respectively, when the program product runs in the central station (10) and/or in the terminal (40).

## Revendications

1. Procédé pour fournir des données de trafic qui représentent la situation de trafic sur au moins un itinéraire d'un réseau d'itinéraires, notamment un réseau routier, par le biais d'au moins un véhicule (6, 7, 8) faisant office de détecteur mobile qui se déplace dans le réseau d'itinéraires, comprenant les étapes suivantes :
détection dans le véhicule (6, 7, 8) de données qui représentent le comportement de conduite et/ou l'environnement du véhicule ;
génération de données de trafic en conditionnant les données détectées à l'aide de données de référence qui sont transmises au véhicule (6, 7, 8) par une centrale (10) et qui sont enregistrées dans le véhicule ; et
transmission des données de trafic à la centrale (10), les données de référence étant au moins partiellement des informations d'itinéraire sur des itinéraires et/ou des portions d'itinéraire du réseau d'itinéraires, **caractérisé en ce que**
les informations d'itinéraire se rapportent à une région (9) préalablement définie et localement limitée qui inclut la position actuelle du véhicule (6, 7, 8) faisant office de détecteur mobile ou qui se trouve à proximité de celui-ci et les informations d'itinéraire ne se rapportant qu'à des itinéraires et/ou des portions d'itinéraire individuels prédéfinis dans la région (9) définie sur lesquels doit effectivement avoir lieu une acquisition des données de trafic.

2. Procédé selon la revendication 1, **caractérisé en ce que** la région (9) enregistrée dans un terminal (40) est adaptée, avec les informations d'itinéraire associées, à une position actuelle modifiée du véhicule (6, 7, 8).

3. Procédé selon la revendication 2, **caractérisé en ce que** l'adaptation de l'information d'itinéraire à la nouvelle région définie (9) s'effectue soit par un remplacement complet des informations d'itinéraire enregistrées jusqu'à présent dans le terminal (40), soit par un écrasement au moins partiel des informations d'itinéraire déjà enregistrées dans le terminal (40).

4. Procédé selon l'une des revendications 1 à 3, **caractérisé en ce que** la centrale (10) transmet au véhicule (6, 7, 8) des données de référence, notamment des informations d'itinéraire, en fonction d'un processus de démarrage du véhicule (6, 7, 8) faisant office de détecteur mobile.

5. Procédé selon l'une des revendications 1 à 4, **caractérisé en ce que** la centrale (10) transmet des données de référence, notamment des informations d'itinéraire, au véhicule (6, 7, 8) faisant office de détecteur mobile en fonction de changements intervenant dans les informations relatives au réseau d'itinéraires et/ou de l'infrastructure environnante et/ou en fonction de changements dans les informations relatives aux états du trafic.

6. Procédé selon l'une des revendications 1 à 5, **caractérisé en ce que** la centrale (10) transmet au véhicule des données de référence, notamment des informations d'itinéraire, sur demande du véhicule (6, 7, 8) faisant office de détecteur mobile.

7. Procédé selon l'une des revendications 1 à 6, **caractérisé en ce que** la centrale (10) transmet au véhicule (6, 7, 8) faisant office de détecteur mobile des données de référence, notamment des informations d'itinéraire, à intervalles donnés.

8. Procédé selon l'une des revendications précédentes, **caractérisé en ce que** la sélection des itinéraires et/ou de portions d'itinéraire prédéfinis s'effectue en fonction de l'infrastructure de la région définie (9) et/ou en fonction du type de route des itinéraires et/ou en fonction de données de trafic déjà connues du réseau d'itinéraires.

9. Procédé selon l'une des revendications 1 à 8, **caractérisé en ce que** les informations d'itinéraire contiennent au moins des données du point de départ et du point d'arrêt des itinéraires et/ou des portions d'itinéraire.

10. Procédé selon l'une des revendications 1 à 9, **caractérisé en ce que** la transmission des données de référence de la centrale (10) au terminal (40) du véhicule (6, 7, 8) et/ou la transmission des données de trafic du terminal (40) à la centrale (10) s'effectue par radiocommunication mobile ou par diffusion.

11. Terminal (40) dans un véhicule (6, 7, 8) d'une flotte d'échantillons faisant office de détecteur mobile, lequel présente au moins un dispositif de détermination de position (45) ou est relié avec celui-ci, un dispositif de mémorisation (43) pour mémoriser des données de référence, un dispositif de traitement de données (44) pour déterminer des informations de trafic en conditionnant les données détectées et/ou dérivées de celles-ci à l'aide des données de référence mémorisées et un dispositif pour échanger des données avec la centrale (10), **caractérisé en ce que** le terminal (40) est configuré pour mettre en oeuvre le procédé selon l'une des revendications 1 à 10 et comprend à cet effet des moyens pour référer les informations d'itinéraire à envoyer à une région (9) préalablement définie et localement limitée qui inclut la position actuelle du véhicule (6, 7, 8) faisant office de détecteur mobile ou qui se trouve à proximité de celui-ci et comprend d'autres moyens qui ne rapportent les informations d'itinéraire qu'à des itinéraires et/ou des portions d'itinéraire individuels prédéfinis dans la région (9) définie sur lesquels doit effectivement avoir lieu une acquisition des données de trafic.

12. Centrale (10) destinée à fournir des données de trafic qui représentent la situation de trafic sur au moins un itinéraire et/ou une portion d'itinéraire d'un réseau d'itinéraires, notamment un réseau routier, laquelle reçoit des données relatives à la position géographique d'au moins un véhicule (6, 7, 8) faisant office de détecteur mobile de la part de celui-ci, la centrale (10) étant configurée de telle sorte que des informations d'itinéraire sur les itinéraires et/ou des portions d'itinéraire du réseau d'itinéraires puissent être envoyées et/ou soient envoyées de la centrale (10) au véhicule (6, 7, 8) faisant office de détecteur mobile ;
**caractérisée en ce que**
les informations d'itinéraire à envoyer et/ou envoyées à un véhicule (6, 7, 8) faisant office de détecteur mobile se rapportent à une région (9) localement limitée qui inclut la position actuelle du véhicule (6, 7, 8) pour laquelle sont déterminées les informations d'itinéraire ou qui se trouve à proximité de celui-ci et les informations d'itinéraire à envoyer et/ou envoyées ne se rapportent qu'à des itinéraires et/ou des portions d'itinéraire individuels prédéfinis dans une région (9) définie sur lesquels doit effectivement avoir lieu une acquisition des données de trafic du véhicule (6, 7, 8) faisant office de détecteur mobile.

13. Centrale (10) selon la revendication 12, **caractérisée en ce que** la centrale (10) est configurée de telle sorte que les informations d'itinéraire à envoyer et/ou envoyées à un véhicule (6, 7, 8) déterminé soient adaptées à une position modifiée du véhicule (6, 7, 8).

14. Centrale (10) selon l'une des revendications 12 ou 13, **caractérisée en ce que** la centrale (10) transmet des informations d'itinéraire à au moins un véhicule (6, 7, 8) faisant office de détecteur mobile en fonction de changements intervenant dans les informations relatives au réseau d'itinéraires et/ou de l'infrastructure environnante et/ou en fonction de changements dans les informations relatives aux états du trafic.

15. Centrale (10) selon l'une des revendications 12 à 14, **caractérisée en ce que** la centrale (10) est configurée de telle sorte que la centrale (10) envoie des informations d'itinéraire sur demande.

16. Centrale (10) selon l'une des revendications 12 à 15, **caractérisée en ce que** la centrale (1) envoie des informations d'itinéraire à au moins un véhicule (6, 7, 8) à intervalles donnés.

17. Centrale (10) selon l'une des revendications 12 à 16, **caractérisée en ce que** la sélection des itinéraires et/ou de portions d'itinéraire prédéfinis s'effectue en fonction de l'infrastructure de la région définie (9) et/ou en fonction du type d'itinéraire et/ou en fonction de données de trafic déjà connues du réseau d'itinéraires.

18. Centrale (10) selon l'une des revendications 12 à 17, **caractérisée en ce que** des informations d'itinéraire contiennent au moins des données du point de départ et du point d'arrêt des itinéraires et/ou des portions d'itinéraire.

19. Centrale (10) selon l'une des revendications 12 à 18, **caractérisée en ce que** les informations d'itinéraire sont émises et/ou peuvent être emises par radiocommunication mobile ou par diffusion.

20. Programme logiciel qui peut être chargé directement dans une mémoire interne de la centrale (10) ou du terminal (40) d'un véhicule faisant office de détecteur mobile et qui comprend des sections de programme avec lesquelles peuvent respectivement être exécutées et/ou sont exécutées les étapes du procédé selon l'une des revendications 1 à 10 lorsque le programme est exécuté dans la centrale (10) et/ou dans le terminal (40).
